# EUROPÄISCHE PATENTSCHRIFT

(11) **EP 0 639 779 B1**
(45) Veröffentlichungstag und Bekanntmachung des Hinweises auf die Patenterteilung: **03.06.1998**
(21) Anmeldenummer: 94112749.0
(22) Anmeldetag: 16.08.1994
(51) Int. Cl.: G01S 15/42, F41G 7/22

(54) **Elektroakustisches Unterwasser-Peilgerät**
Electro acoustic under water direction finder
Goniomètre électroacoustique subaquatique

(30) Priorität: 19.08.1993 DE 4327841
(43) Veröffentlichungstag der Anmeldung: 22.02.1995
(73) Patentinhaber: AlliedSignal Elac Nautik GmbH, 24118 Kiel (DE)
(72) Erfinder: Höring, Friedrich, Dr. Dipl.-Phys., D-24111 Kiel (DE)
(74) Vertreter: Rentzsch, Heinz, Dipl.-Ing.

(56) Entgegenhaltungen:
- EP-A- 0 355 669
- WO-A-85/05694
- WO-A-90/00715
- GB-A- 2 027 888
- GB-A- 2 070 522
- US-A- 3 738 270
- US-A- 4 079 687
- PATENT ABSTRACTS OF JAPAN vol. 7, no. 253 (P-235) 10. November 1983 & JP-A-58 135 981

## Beschreibung

Die Erfindung betrifft ein für eine elektroakustische Rundumpeilung geeignetes Unterwasser-Peilgerät. Ein aus DE-C 38 28 151 bekanntes Peilgerät mit einem im Gewässer absinkenden zylindrischen Träger für radial zur Sinkachse und dabei im wesentlichen parallel zur Gewässeroberfläche Peilsignale abstrahlende Sendewandler sowie ebenfalls radial ausgerichtete Empfangswandler verwendet miteinander rotierende Sende- und Empfangswandler, wobei entweder ein Sendewandler mit breitem Richtdiagramm zusammen mit einem scharf gebündelten Empfangswandler umläuft oder umgekehrt ein scharf gebündelter Sendewandler in Verbindung mit einem Empfangswandler mit großem Öffnungswinkel zusammenarbeitet. Beide Wandler rotieren gleichförmig, und die Hauptsenderichtung läuft gegenüber der Hauptempfangsrichtung um einen Winkel von der halben Breite der jeweils breiteren Richtcharakteristik voraus. Während eines jeden der aufeinanderfolgenden und jeweils der maximalen Echolaufzeit entsprechenden Zeitintervalls werden im vorgegebenen zeitlichen Abstand mehrere unterschiedlich codierte Sendeimpulse abgestrahlt.

Auch ein in US-A 3 738 270 beschriebener Torpedo zur U-Bootbekämpfung sieht beim Absinken des beispielsweise aus einem Hubschrauber abgeworfenen Torpedos eine Drehung des Torpedos und seines radial zur Torpedoachse abstrahlenden Suchsonars vor, um während der Sinkphase das U-Boot zu orten. Sodann führt ein im Kopf des Torpedos vorgesehenes Zielverfolgungssonar den Torpedo ans Ziel.

Ein Unterwasser-Peilgerät gemäß Gattungsbegriff des Anspruchs 1 ist aus US-A 4 372 239 bekannt. Der dort beschriebene, aus einem Hubschrauber abgeworfene oder von einem Schiff abgeschossene Torpedo zur U-Bootbekämpfung weist außer einem an der Stirnseite des Torpedos angebrachten Zielverfolgungssonar ein am Umfang des Torpedos vorgesehenes Überwachungssonar auf, welches aus acht gleichmäßig über den Umfang verteilten, radial ausgerichteten Wandlern besteht, welche bei Sendebetrieb gleichzeitig erregt und für den Richtungsempfang nacheinander abgetastet werden. Der Torpedo ist mit einem Wasserstrahlantrieb versehen, bei dem während einer ersten Phase Seewasser in einen im Torpedo vorgesehenen Behälter strömt, welches in einer zweiten Phase durch mittels eines Gasgenerators erzeugtes Druckgas aus dem Heck des Torpedos ausgestoßen wird, um den Torpedo nach vom zu beschleunigen. Um das Zielerfassungssonar und das Zielverfolgungssonar nicht durch die Eigengeräusche des Torpedoantriebs zu stören, werden die Sonargeräte jeweils nur während der Antriebspausen eingeschaltet, in denen zwar Seewasser in den Behälter strömt, nicht aber durch das während der Antriebsphase ausgestoßene Wasser Eigengeräusche und Strömungswirbel erzeugt werden.

Das im Anspruch 1 gekennzeichnete Unterwasser-Peilgerät gemäß vorliegender Erfindung zeichnet sich durch einen gegenüber dem Stand der Technik stark vereinfachten Aufbau aus und benötigt keinen Umlauf der Wandler und damit keine Rotation des zum Gewässerboden absinkenden Wandlerträgers. Es eignet sich insbesondere für Effektoren zur Bekämpfung von Unterwasserfahrzeugen, welche nach dem Abwurf aus einem Flugzeug beim Absinken zum Gewässerboden durch Rundumpeilung die Richtung des Ziels ermitteln, und sobald dies geschehen ist, durch Einschalten eines Antriebes eine durch einen Sonarsuchkopf gesteuerte Fahrt in Richtung Ziel einleiten. Durch die versetzte Anordnung der Wandler am Umfang des Trägers sowie die überlappende Anordnung der Richtdiagramme erhält man mit nur wenigen, z.B. vier Wandlern, eine recht gleichförmige Ausleuchtung der Umgebung über den gesamten Azimut, wobei durch die Ausgestaltung der Richtdiagramme als flache Keulen eine Ermittlung der Tauchtiefe des Ziels ermöglicht wird. Dies erleichtert die nachfolgende Heranführung des Wirkkörpers an das Ziel mit Hilfe des Zielverfolgungssonars. Vorteilhafte Ausgestaltungen der Erfindung sind in den Unteransprüchen gekennzeichnet.

Die Erfindung wird nachfolgend anhand eines in den Zeichnungen wiedergegebenen Ausführungsbeispiels erläutert. Darin zeigt:
- Figur 1: die Anwendung des erfindungsgemäßen Unterwasser-Peilgeräts in einem torpedoartigen Wirkkörper während der verschiedenen Phasen der Bekämpfung eines Unterwasserziels;
- Figur 2a: die Strahlungsdiagramme der verschiedenen Wandleranordnungen während der Sinkphase;
- Figur 2b: die frontseitige Empfangskeule des Zielverfolgungs-Sonar während des Anlaufs zum Ziel;
- Figur 3: eine vertikale Draufsicht auf das Sendediagramm und die Empfangsdiagramme der der Rundumpeilung dienenden Wandler während der Sinkphase;
- Figur 3b: einen vertikalen Schnitt durch die Sende- und Empfangsdiagramme der Peilwandler; und
- Figur 4: eine schematische Längsansicht des die Wandler tragenden Teils des torpedoartigen Wirkkörpers.

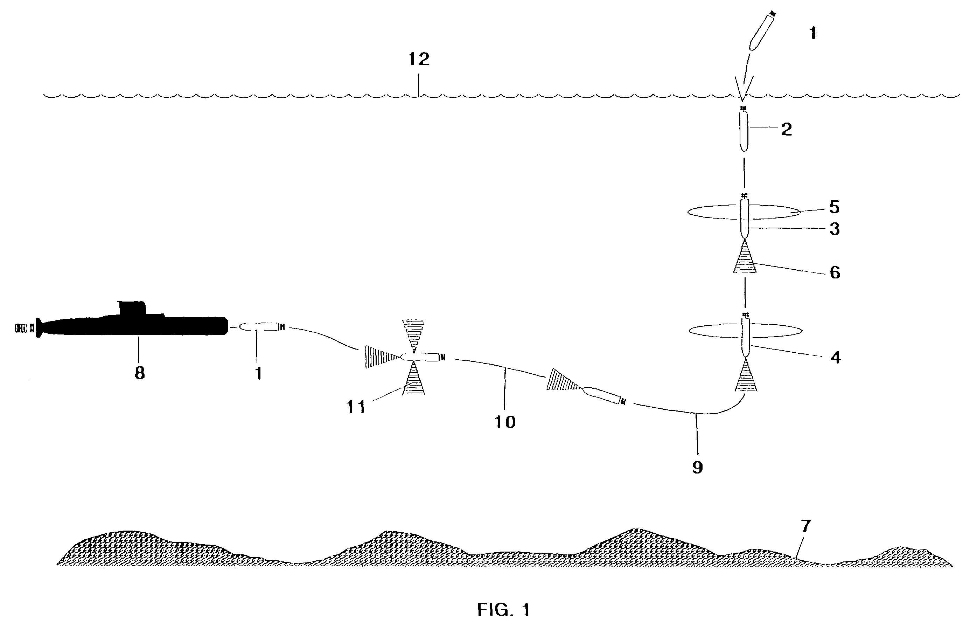

Figur 1 zeigt, daß der Wirkkörper 1 nach dem Abwerfen aus der Luft und dem Eintauchen in das Gewässer über die Positionen 2, 3 und 4 nach unten sinkt und dabei durch Rundumpeilung mit einem scheibenförmigen Sende- und Empfangsdiagramm 5 die Umgebung abtastet und zugleich durch Echolotung 6 den Abstand vom Gewässerboden 7 mißt und somit das Ziel 8 sowohl hinsichtlich seiner Azimutwinkellage als auch hinsichtlich seiner Tauchtiefe erfaßt. Sobald der Wirkkörper 1 das Ziel 8 erfaßt hat, geht er im Bereich 9 aus der Sinkphase in die Zielverfolgungsphase 10 über, wobei das zuvor als Echolot benutzte Wandlersystem nunmehr als Zielverfolgungs-Sonar Verwendung findet. Seine Wandler sind in der Stirnseite des Wirkkörpers 1 untergebracht. Zugleich messen radial abstrahlende Wandler 11 den Abstand zum Gewässerboden 7 und/oder zur Wasseroberfläche 12. Diese Informationen zusammen mit der während der Sinkphase erkannten und gespeicherten Höhen- und Winkelinformation des Ziels leiten den Wirkkörper 1 zum Ziel 8.

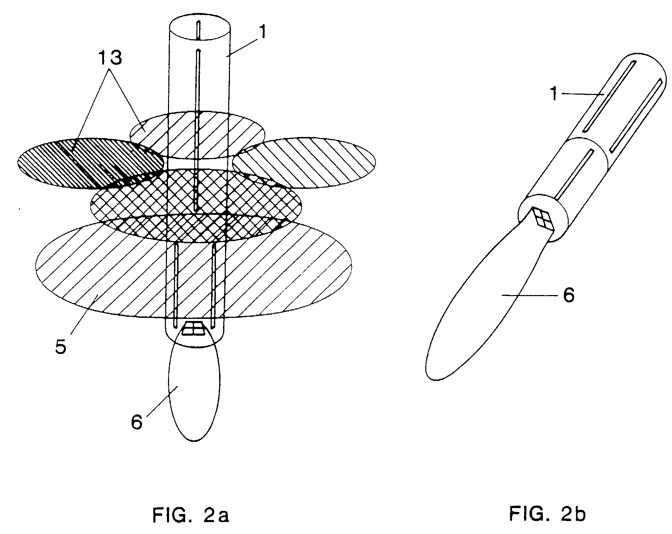

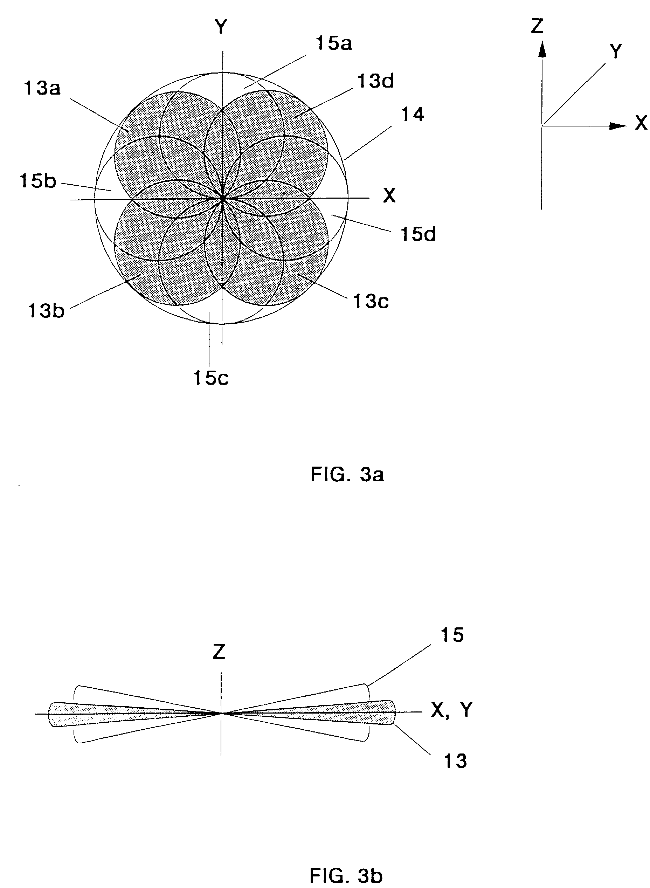

Während der in Figur 2a wiedergegebenen Sinkphase des Wirkkörpers 1 wird von den Sendewandlern ein möglichst kreisförmiges akustisches Sendediagramm 5 in Form einer flachen Scheibe abgestrahlt und mit einem richtungsempfindlichen Empfangsdiagramm 13 der Horizont abgetastet. Dieses Empfangsdiagramm besteht im gezeigten Fall aus vier rechtwinklig zueinander angeordneten Empfangskeulen 13a - 13d (vgl. Fig. 3a), wobei benachbarte Keulen einander überlappen. Die Empfangskeulen sind ebenfalls flach, um durch scheibenförmige Abtastung des Umfeldes während des Absinkens nicht nur die Richtung, sondern auch die Höhenlage bzw. Tauchtiefe des Ziels 8 zu ermitteln. Die jeweilige vertikale Eigenposition des Wirkkörpers 1 mißt das Echolot 6. Beim Übergang in die Zielverfolgungsphase 10 schaltet das Echolot 6 auf einen Zielverfolgungsmodus um, bei dem eine in vier Quadranten unterteilte, nach vorn gerichtete Wandleranordnung die jeweilige Lageabweichung des Ziels von der Sichtlinie des Wirkkörpers mißt und den Wirkkörperantrieb entsprechend korrigiert.

Das ideale Sendediagramm 5 wäre kreisförmig. Da dies mit einem vertretbaren Aufwand an Wandlern nicht realisierbar ist, benutzt die Erfindung im gezeigten Ausführungsbeispiel nach Figur 3a vier rechtwinklig zueinander angeordnete, in Draufsicht schematisch als Kreise wiedergegebene Sendediagramme 15a bis 15d und für den Empfang vier ebenfalls rechtwinklig zueinander angeordnete Empfangsdiagramme 13a bis 13d. Dabei ist, wie der Vertikalschnitt gemäß Figur 3b zeigt, der vertikale Öffnungswinkel der Sendediagramme 15 etwa dreimal so groß wie der vertikale Öffnungswinkel der Empfangsdiagramme 13. Die Sendediagramme haben beispielsweise einen Öffnungswinkel von 15° und die Empfangsdiagramme von 4°. Es ist wichtig, daß diese Diagramme möglichst flach sind, damit in Verbindung mit der Eigentiefenmessung des Wirkkörpers eine möglichst genaue vertikale Lokalisierung des Ziels 8 möglich und der Wirkkörper in der Zielverfolgungsphase nicht nur auf den richtigen Kurs, sondern auch auf die richtige Tauchtiefe des Ziels gebracht werden kann. Bei der gezeigten Anordnung mit jeweils vier orthogonalen Senderkeulen 15a bis 15d und vier ebenfalls untereinander orthogonalen Empfangskeulen 13a bis 13d ist eine gute Rundumbedeckung des die Sinkbahn umgebenden Gewässers gewährleistet, wenn, wie im gezeigten Ausführungsbeispiel nach Figur 3a, die Hauptachse der Empfangskeulen 13 gegenüber der Hauptachse der Sendekeulen um jeweils 45°, d.h. den halben Winkelabstand der Sendekeulen in Azimutrichtung versetzt ausgerichtet sind. Ein solcher Versatz führt zu einer Quasi-Rundumcharakteristik des Produkts Sendediagramm x Empfangsdiagramm. Die besonders flache Ausbildung der Diagramme ist nicht nur für die Höhenlokalisierung des Ziels erforderlich, sondern schließt zugleich das Entstehen von Störechos an der Gewässeroberfläche bzw. am Gewässerboden weitgehend aus.

An jeder einer Empfangskeule zugeordneten Wandleranordnung ist ein getrennter Empfangskanal angeschlossen. Eine Grobabschätzung der azimutalen Zielrichtung ergibt sich durch Vergleich der Signalpegel benachbarter Empfangskanäle. Während des Absinkens des Wirkkörpers im Gewässer wird dessen Abstand vom Gewässerboden durch das Echolot 6 fortlaufend gemessen. Seine senkrecht abgestrahlten Sendeimpulse werden mit den horizontal abgestrahlten Impulsen des die vier Sendekeulen erzeugenden Suchsonars synchronisiert. Da die Echoimpulsfolge ziemlich niedrig ist, können Tiefenmessungen etwa alle Sekunden durchgeführt werden, d.h. in einem Zeitabstand, während dessen der Wirkkörper mit seiner Sinkgeschwindigkeit absinkt. Die dazwischenliegende tatsächliche Tiefe des Ziels kann durch Interpolation ermittelt werden.

Zur Verringerung des Geräteaufwandes empfiehlt es sich, für alle Sonaruntersysteme die gleiche Frequenz von beispielsweise 50 kHz zu verwenden, so daß beispielsweise Leistungsverstärker, Filter und Wandler gleichen Bautyps eingesetzt werden können.

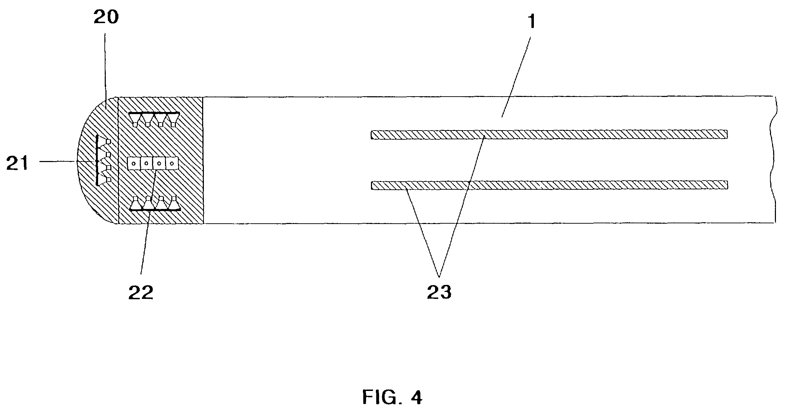

Figur 4 zeigt in schematischer Darstellung die Anordnung der verschiedenen Wandlergruppen am Wirkkörper 1. An seiner vorderen Stirnseite 20 befindet sich eine in vier Quadranten unterteilte Wandlergruppe 21, welche während der Sinkphase als Echolot und während der Zielverfolgungsphase als Zielverfolgungssonar arbeitet. Sie besteht beispielsweise aus zwei vertikal übereinander angeordneten Wandlerzeilen mit je vier Wandlerelementen. Dahinter befinden sich über den Umfang gleichmäßig verteilt vier zeilenförmige Wandlergruppen 22, welche im Suchbetrieb als Sendewandler dienen und die vier Sendekeulen 15a bis 15d erzeugen. Jede der Wandlerzeilen 22 hat beispielsweise 6 Wandlerelemente. Bei den Wandlern 20 und 21 finden bevorzugt elektroakustische Wandler vom Tonpilz-Typ Verwendung. Als Empfangswandler dienen im gezeigten Ausführungsbeispiel vier langgestreckte Zeilen 23, welche sich ebenso wie die Wandlerzeilen 22 parallel zur Längsachse des Wirkkörpers 1 erstrecken und im Winkel um 90° gegeneinander versetzt sind. Dabei sind die Empfangswandler 23 gegenüber den Sendewandlern 22, wie zuvor anhand von Figur 3a erläutert wurde, um 45° in Umfangsrichtung versetzt. In Längsrichtung des Wirkkörpers 1 sind die Sendewandler 22 und die Empfangswandler 23 im Abstand voneinander angeordnet, wodurch eine ausreichende akustische Entkopplung gewährleistet ist. Die Empfangswandlerzeilen 23 bestehen beispielsweise aus einer piezoelektrischen Kunststoffolie, wie Polyvinylidenflourid PVDF oder PVF₂. Zur Erzielung einer engeren vertikalen Bündelung ist die Längenausdehnung der Empfangshydrophone 23 erheblich größer als die der oben beschriebenen Sendewandlerzeilen 22. Die Verwendung von Folienhydrophonen senkt den Realisierungs- und Montageaufwand erheblich. Durch eine geeignete Formgebung der aus piezoelektrischem Folienmaterial bestehenden Empfangswandler 23 läßt sich erreichen, daß eine resultierende Empfangsrichtcharakteristik nur geringe Nebenkeulen aufweist und hierdurch Falschalarme infolge Nachhall vermieden werden.

Während der Zielverfolgungsphase 10 können die Sendewandler 22 zur Bestimmung der jeweiligen Vertikalposition des Wirkkörpers dienen, indem sie nunmehr als eine Art Echolot den Abstand zum Gewässerboden 7 und/oder zur Wasseroberfläche 12 messen. Durch Vergleich dieser Meßwerte wird der Wirkkörper auf die zuvor während der Sinkphase gemessene Höhe des Ziels 8 gebracht. Dies erleichtert die Zielverfolgung mit Hilfe des frontseitigen Sonars 21. Beim Eintauchen des Wirkkörpers 1 in das Wasser sowie bei Zielberührung entstehen in den stirnseitigen Wandlern 21 Druckstöße, die als elektrische Impulssignale der elektronischen Steuereinrichtung bzw. der Zündeinrichtung des Wirkkörpers zugeleitet werden.

## Patentansprüche

1. Elektroakustisches Unterwasser-Peilgerät mit einem im Gewässer absinkenden, vorzugsweise zylindrischen Träger für radial zur Sinkachse und dabei im wesentlichen parallel zur Gewässeroberfläche Peilsignale abstrahlende und empfangende Wandler (22, 23), welche am Umfang des Trägers (1) in gleichem Azimutwinkelabstand vorgesehen sind,
**dadurch gekennzeichnet**, daß
a) jede Sendewandlergruppe (22) eine in ihrer vertikalen Ausdehnung flache Schallkeule (15) aussendet;
b) die Schallkeulen (15a bis 15d) benachbarter Sendewandlergruppen in Umfangsrichtung aneinander überlappen;
c) in Umfangsrichtung des Trägers in gleichem Azimutwinkelabstand mehrere Empfangswandlergruppen (23) vorgesehen sind, deren Empfangsdiagramme (13) als in ihrer vertikalen Ausdehnung flache Empfangskeulen (13a bis 13d) ausgebildet sind;
d) die Empfangskeulen (13) benachbarter Wandlergruppen (13a bis 13d) in Umfangsrichtung einander überlappen; und
e) die Sendewandlergruppen (22) in Umfangsrichtung im Winkel derart versetzt angeordnet sind, daß der Winkelversatz der Empfangswandlergruppen (23) gegenüber den Sendewandlergruppen (22) gleich dem halben Winkelabstand zwischen benachbarten Sendewandlergruppen ist.

2. Peilgerät nach Anspruch 1, **gekennzeichnet durch** je vier Sende- und Empfangswandlergruppen (22, 23).

3. Peilgerät nach Anspruch 1 oder 2, **dadurch gekennzeichnet,** daß die vertikale Dicke der Empfangskeulen (13) geringer ist als diejenige der Sendekeulen (15).

4. Peilgerät nach einem der Ansprüche 1 bis 3, **dadurch gekennzeichnet,** daß jede der Sendewandlergruppen (22) und/oder Empfangswandlergruppen (23) aus wenigstens einer mehrere Einzelwandler umfassenden Wandlerzeile besteht.

5. Peilgerät nach einem der Ansprüche 1 bis 3, **dadurch gekennzeichnet,** daß jede Empfangswandlergruppe (23) aus einem an der Trägeraußenseite befestigten Streifen aus piezoresistivem oder piezoelektrischem Material, vorzugsweise Polyvinylidenflourid PVDF oder PVF₂, besteht.

6. Peilgerät nach Anspruch 5, **gekennzeichnet durch** eine solche äußere Formgebung, der aus piezoelektrischem Folienmaterial bestehenden Empfangswandler (23), daß die resultierende Empfangsrichtcharakteristik geringe Nebenkeulen aufweist.

7. Peilgerät nach einem der Ansprüche 1 bis 6, **dadurch gekennzeichnet**, daß die Sendewandlergruppen (22) in Sinkrichtung vor den Empfangswandlergruppen (23) angeordnet sind.

8. Peilgerät nach einem der Ansprüche 1 bis 7, **dadurch gekennzeichnet**, daß an der vorderen Stirnseite des Trägers (1) eine als Zielverfolgungssonar oder als Echolot verwendbare Vierquadranten-Wandleranordnung (21) angeordnet ist.

9. Peilgerät nach Anspruch 8, **dadurch gekennzeichnet**, daß die stirnseitigen Wandler (21) beim Wassereintritt und/oder bei Zielberührung als passive Druckempfänger elektrische Impulssignale liefern.

10. Peilgerät nach einem der Ansprüche 1 bis 9, **dadurch gekennzeichnet**, daß die Sendewandler (22) als Tonpilz-Wandler ausgebildet sind.

11. Peilgerät nach einem der Ansprüche 1 bis 10, **dadurch gekennzeichnet**, daß die Sendewandler (22) oder die Empfangswandler (23) bei angenähert horizontal schwimmendem Träger (1) als Echolot zur Abstandsmessung zwischen dem Träger (1) und dem Gewässerboden und/oder der Gewässeroberfläche arbeiten.

## Claims

1. An electro acoustic under-water direction finder including a preferably cylindrical carrier, sinking down in the body of water and carrying transducers (22, 23), which transmit and receive, respectively, direction finding signals travelling radially with respect to the sinking axis and essentially in parallel to the water surface, which transducers are provided at regular azimuth angular distances around the circumference of said carrier (1);
**characterized in that**
a) each group of transmitting transducers (22) transmits a sound lobe (15) which is flat in its vertical direction;
b) the sound lobes (15a to 15d) of adjacent groups of transmitting transducers overlap each other in circumferential direction;
c) several groups of receiving transducers (23) are provided at regular azimuth angular distances around the circumference of said carrier, with the receiving diagrams (13) of said transducers being shaped in vertical direction as flat receiving lobes (13a to 13d);
d) the receiving lobes (13) of adjacent transducer groups (13a to 13d) overlap each other in circumferential direction; and
e) said groups of transmitting transducers (22) are angularily offset in circumferential direction such that the angular offset between said groups of receiving transducers (23) and said groups of transmitting transducers (22) equals half of the angular distance between adjacent groups of transmitting transducers.

2. The direction finder of claim 1, characterized by four groups each of transmitting transducers (22) and receiving transducers (23).

3. The direction finder of claim 1 or 2, characterized in that the vertical thickness of the receiving lobes (13) is smaller than the thickness of the transmitting lobes (15).

4. The direction finder according to one of the claims 1 to 3, characterized in that each group (22) of transmitting transducers and/or each group (23) of receiving transducers includes at least one row of several individual transducers.

5. The direction finder of one of the claims 1 to 3, characterized in that each group (23) of receiving transducers consists of a strip of piezoresistive or piezoelectric matarial, preferably of polyvinylidenflouride PVDF or PVF₂, fixed to the outer surface of said carrier.

6. The direction finder of claim 5, characterized by such an outer shape of said receiving transducers (23) consisting of a piezoelectric film material, that the resulting receiving diagram has only small side lobes.

7. The direction finder according to one of the claims 1 to 6, characterized in that in the sinking direction the groups (22) of transmitting transducers are located ahead of the group (23) of receiving transducers.

8. The direction finder according to one of the claims 1 to 7, characterized in that a four-quadrant transducer array (21) is provided at the front side of said carrier (1) and can be used as a target tracking sonar or as an echo sounding equipment.

9. The direction finder of claim 8, characterized in that the front side transducers (21) serve as passive pressure probes when entering the body of water and/or when touching the target, and then generate electrical pulse signals.

10. The direction finder according to one of the claims 1 to 9, characterized in that the transmitting transducers (22) are Tonpilz-type transducers.

11. The direction finder according to one of the claims 1 to 10, characterized in that said transmitting transducers (22) or said receiving transducers (23) operate as echo sounder for measuring the distance between said carrier (1) and the sea bottom and /or the sea surface, when said carrier (1) moves about horizontally.

## Revendications

1. Appareil de repérage électroacoustique subaquatique, du genre goniomètre, comprenant un support, de préférence cylindrique, plongeant dans les eaux, pour des transducteurs (22, 23) qui diffusent et captent des signaux de repérage radialement à l'axe de plongée et ainsi sensiblement parallèlement à la surface des eaux, et qui sont prévus sur la circonférence du support (1) selon un espacement angulaire azimutal identique,
caractérisé en ce que
a) chaque groupe de transducteurs d'émission (22) émet un lobe de rayonnement acoustique (15) plat dans son étendue verticale;
b) les lobes de rayonnement acoustique (15a à 15d) de groupes voisins de transducteurs d'émission se chevauchent les uns les autres dans la direction circonférentielle ;
c) dans la direction circonférentielle du support sont prévus, selon un espacement angulaire azimutal identique, plusieurs groupes de transducteurs de réception (23) dont les diagrammes de réception (13) sont constitués par des lobes de réception (13a à 13d) plats dans leur étendue verticale;
d) les lobes de réception (13) de groupes voisins de transducteurs (13a à 13d) se chevauchent dans la direction circonférentielle ; et
e) les groupes de transducteurs d'émission (22) sont disposés de manière angulairement décalée dans la direction circonférentielle de façon telle, que le décalage angulaire des groupes de transducteurs de réception (23) par rapport aux groupes de transducteurs d'émission (22) soit égal au demi espacement angulaire entre des groupes voisins de transducteurs d'émission.

2. Appareil de repérage selon la revendication 1, caractérisé par quatre groupes de transducteurs d'émission et quatre groupes de transducteurs de réception (22, 23).

3. Appareil de repérage selon la revendication 1 ou 2, caractérisé en ce que l'épaisseur verticale des lobes de réception (13) est inférieure à celle des lobes d'émission (15).

4. Appareil de repérage selon l'une des revendications 1 à 3, caractérisé en ce que chacun des groupes de transducteurs d'émission (22) et/ou des groupes de transducteurs de réception (23) est constitué d'au moins une ligne de transducteurs comprenant plusieurs transducteurs individuels.

5. Appareil de repérage selon l'une des revendications 1 à 3, caractérisé en ce que chaque groupe de transducteurs de réception (23) est constitué par une bande de matériau piézo-résistif ou piézo-électrique, de préférence de fluorure de polyvinylidène PVDF ou PVF₂, fixée sur le côté extérieur du support.

6. Appareil de repérage selon la revendication 5, caractérisé par une configuration extérieure telle, des transducteurs de réception (23) réalisés en un matériau piézo-électrique en feuille, que la caractéristique directionnelle de réception résultante présente de petits lobes secondaires.

7. Appareil de repérage selon l'une des revendications 1 à 6, caractérisé en ce que les groupes de transducteurs d'émission (22) sont disposés devant les groupes de transducteurs de réception (23) en se référant à la direction de plongée.

8. Appareil de repérage selon l'une des revendications 1 à 7, caractérisé en ce que sur la face frontale avant du support (1), est disposé un ensemble de transducteurs à quatre quadrants (21) pouvant être utilisé en tant que sonar de poursuite de cible ou en tant qu'écho-sonde.

9. Appareil de repérage selon la revendication 8, caractérisé en ce que lors de la pénétration dans l'eau et/ou lors de l'entrée en contact avec la cible, les transducteurs (21) situés sur la face frontale fournissent, en tant que récepteurs de pression passifs, des signaux électriques en forme d'impulsions.

10. Appareil de repérage selon l'une des revendications 1 à 9, caractérisé en ce que les transducteurs d'émission (22) sont réalisés sous forme de transducteurs du type tonpilz.

11. Appareil de repérage selon l'une des revendications 1 à 10, caractérisé en ce que les transducteurs d'émission (22) ou les transducteurs de réception (23) fonctionnent, lorsque le support (1) se déplace dans l'eau approximativement à l'horizontale, en tant qu'écho-sonde pour mesurer la distance entre le support (1) et le fond des eaux et/ou la surface des eaux.
